# EUROPEAN PATENT SPECIFICATION

(11) **EP 3 667 057 B1**
(45) Date of publication and mention of the grant of the patent: **31.08.2022**
(21) Application number: 18212256.4
(22) Date of filing: 13.12.2018
(51) Int. Cl.: F02M 51/06, F02M 61/20

(54) **FLUID INJECTOR WITH A BISTABLE SPRING ELEMENT**
FLÜSSIGKEITSINJEKTOR MIT EINEM BISTABILEN FEDERELEMENT
INJECTEUR DE FLUIDE AVEC UN ÉLÉMENT DE RESSORT BISTABLE

(43) Date of publication of application: 17.06.2020
(73) Proprietor: Vitesco Technologies GmbH, 93055 Regensburg (DE)
(72) Inventor: Izzo, Ivano, 56127 Pisa (IT)
(74) Representative: Vitesco Technologies

(56) References cited:
- WO-A1-2015/039859
- DE-A1-102006 009 070
- US-A1- 2014 306 034
- US-A1- 2015 090 913

## Description

The present disclosure relates to a fluid injector for injecting fluid into a combustion engine or in other parts of a vehicle, wherein the fluid injector comprises a bistable spring element.

A fluid injector is configured to permit a flow of fluid in response to an electrical signal. Advanced combustion engine technology requires precise control over opening and closing times of the fluid injector in order to perform high-precision injection. If the combustion engine is of a piston type, multiple injection phases during one stroke of one piston in one cylinder of the engine may be required. As members of the fluid injector are bound to physical masses, practical behavior of the fluid injector may differ from idealized theoretical behavior which may foresee infinitely high opening or closing velocities or a linear relationship between the pulse length of an electrical signal for opening the fluid injector and an actual flow of fluid through the fluid injector.

In addition, particle number emission requirements fixed by laws are getting stricter. An option to meet particle number emission requirements is to increase a fluid pressure of the injected fluid. The higher fluid pressure in the fluid injector could damage the fluid injector or could lead to internal problems in the fluid injector.

US 2015 / 090 913 A1 discloses a valve for metering fluid which has a valve housing having a valve opening and a valve seat, a valve needle, which is provided for the alternating closing and opening of the valve using a closing member cooperating with the valve seat, a resetting element that acts on the valve needle for closing the valve and an electromagnet that is able to have current applied to it, having a magnet armature that is drivable to a lift motion, which sits axially displaceably on the valve needle and carries along the valve needle in the lift direction for opening the valve via a driving flange situated on it.

It is an object of the present disclosure to provide a fluid injector which is able to operate with a higher fluid pressure. This object is achieved by a fluid injector with the features of the independent claim. Dependent claims indicate advantageous embodiments and developments.

According to the present disclosure, a fluid injector for injecting fluid into a combustion engine comprises a housing which extends along an axis L, a valve needle which is axially moveable with respect to the housing, an actuator which comprises a pole piece and an armature, wherein the armature is axially moveable with respect to the housing, and wherein the armature is mechanically coupled with the valve needle to displace the valve needle axially when the armature moves towards the pole piece, and a bistable spring element which comprises a first end which is seated against the armature and a second end which is seated against the housing, wherein the bistable spring element has a first stable state, a second stable state and an unstable equilibrium state, wherein the armature is displaceable in a reciprocating fashion between a first position in which the bistable spring element is in the first stable state and a second position in which the bistable spring element is in the second stable state via the unstable equilibrium state of the bistable spring element, wherein the bistable spring element biases the armature in direction away from the pole piece when the bistable spring element is between the first stable state and the unstable equilibrium state, and wherein the bistable spring element biases the armature towards the pole piece when the bistable spring element is between the unstable equilibrium state and the second stable state.

The actuator is in particular an electromagnetic actuator with the moveable armature and the pole piece. The pole piece is preferably rigidly coupled to the housing. Expediently, the actuator may further comprise a solenoid which can be energized to attract the armature towards the pole piece.

The armature is mechanically coupled with the valve needle. This means that an area of the armature can engage with an area of the valve needle to move the valve needle axially with respect to the axis L. This displacement of the valve needle is necessary to allow the fluid inside the fluid injector to flow through the fluid injector and to flow out of the fluid injector.

The fluid in the fluid injector is pressurized. The pressurized fluid pushes against the valve needle in a closed position in which the fluid flow is prevented. To enable the fluid flow through the fluid injector, the valve needle has to be displaced from the closed position. A force to displace the valve needle to allow the fluid flow through the fluid injector has to be greater than the force that holds the valve needle in the closed position. In a conventional fluid injector with fluid pressures below 20 MPa or below 30 MPa the force applied to the armature by the actuator which moves the armature towards the pole piece can be great enough to displace the valve needle from the closed position. But with high pressurized fluids, for example, with pressures above 20 MPa or even above 30MPa, it could be necessary to increase the applied magnetic force to the armature or to add another force to the armature to move the armature towards the pole piece so that the armature has enough power to displace the valve needle from the closed position when the armature engages with the valve needle. Limited installation space makes it difficult to increase the actuator unit to enhance the magnetic force applied to the armature. The bistable spring element is arranged in the fluid injector with conventional dimensions and adds another force to the armature to move the armature towards the pole piece. The bistable spring element can therefore even in the conventional fluid injector or in a fluid injector with the same outer dimensions be used to enhance the force applied to the armature.

The bistable spring element is a spring element that has at least two stable states, the first stable state and the second stable state. The bistable spring element can only be brought from the first stable state to the second stable state by an external perturbation. The external perturbation could be for example a force applied to the bistable spring element. Such a force is, for example, the force applied to the armature by the actuator to pull the armature towards the pole piece.

The first end of the bistable spring element is seated against the armature and the second end of the bistable spring element is seated against the housing. In one embodiment, the first end is the inner radial edge region of the bistable spring element and the second end is the outer radial edge region of the bistable spring element. This means that the first end is arranged to engage with the armature and that the second end is arranged to engage with the housing. The engagements are realized with rigid connections in some embodiments or with connections which are loose in some directions in other embodiments. It is also conceivable that the ends of the bistable spring element are seated against other parts of the fluid injector which are rigidly coupled to the armature or to the housing, respectively.

When the bistable spring element is brought from the first stable state to the second stable state it has to pass the unstable equilibrium state. In the unstable equilibrium state a small perturbation will bring the bistable spring element in either the first or the second stable state. No axial force is applied to the armature by the bistable spring element when it is in the unstable equilibrium state.

The bistable spring element is configured to generate a biasing force in a first direction when the bistable spring element is between the first stable state and the unstable equilibrium state. The bistable spring element is also configured to generate a biasing force in a second direction which is opposite to the first direction when the bistable spring element is between the unstable equilibrium state and the second stable state.

The bistable spring element exerts its biasing force on the armature in direction away from the pole piece when the bistable spring element is between the first stable state and the unstable equilibrium state and the bistable spring element exerts its biasing force to the armature in direction to the pole piece when the bistable spring element is between the unstable equilibrium state and the second stable state. Therefore, the force to move the armature towards the pole piece comprise the magnetic force applied to the armature by the solenoid and the biasing force applied to the armature by the bistable spring element. The force applied to the armature by the bistable spring element changes its direction depending on the position of the armature. The valve needle can thus be displaced by the armature with the magnetic force and the biasing force. A displacing force, which comprises the magnetic force and the biasing force, can be applied to the valve needle to move the valve needle away from the closed position. The displacing force is therefore greater compared to the conventional force which consists only of the magnetic force. The fluid injector can therefore be used even if the fluid pressure is increasing and the flow of fluid can be controlled advantageously fast and accurate. By using the fluid injector with the bistable spring element, it is possible to increase the pressure of the fluid inside the fluid injector. This increased pressure allows the fluid injector to inject the fluid advantageously atomized. If the fluid injector is used in a combustion engine it is therefore possible to inject fuel advantageously atomized into a piston of the combustion engine. The advantageously atomized fuel injected by the fluid injector can help to meet Particle Number Emission Requirements fixed by Laws.

In one embodiment, the armature comprises a first coupling surface and the valve needle comprises a second coupling surface, wherein the coupling surfaces are arranged to engage in form fit connection to displace the valve needle axially, wherein the coupling surfaces are spaced apart from each other to form an axial gap between the coupling sufaces when the bistable spring element is between the first stable state and the unstable equilibrium state. The coupling surfaces are surfaces or areas on the armature and the valve needle which can contact each other to transfer the displacement force from the armature to the valve needle or from the valve needle to the armature. The axial gap is an axial distance or an axial clearance between the first coupling surface and the second coupling surface. This means that the armature with the first coupling surface has to be displaced by the axial distance to close the axial gap so that the first coupling surface can engage with the second coupling surface of the valve needle. During this period, it is possible for the armature to gain speed so that the armature can hit the valve needle with the gained speed. The displacement of the valve needle from the closed position can then be performed by the impuls of the armature and by the biasing force of the bistable spring element which biases the armature towards the pole piece and exerts therefore the biasing force on the armature and when the first coupling surface has engaged with the second coupling surface also to the valve needle. It is therefore advantageously possible to increase the force which displaces the valve needle away from the closed position. The valve needle can therefore advantageously be displaced away from the closed position even if the pressure inside the fluid injector is very high, for example above 30 MPa.

In one embodiment, the first coupling surface and the second coupling surface are configured such that the axial gap closes when the biasing force of the biasing spring element applied to the armature towards the pole piece reaches its maximum. The biasing force of the bistable spring element depends on the axial position of the armature. The biasing force of the bistable spring element has at least one maximum between the unstable equilibrium state and the second stable state of the unstable spring element. If the armature hits the valve needle when the biasing force towards the pole piece reaches its maximum, the momentum of the armature is very high, and the displacement force applied to the valve needle by the armature is high enough to displace the valve needle away from the closed position even if the fluid pressure in the fluid injector is extremely high.

In one embodiment, the armature is displaceable form the second position further towards the pole piece, wherein the bistable spring element is configured to bias the armature in direction away from the pole piece when the armature is displaced from the second position further towards the pole piece. Generally, it is possible that the armature can move towards the pole piece until the armature hits the pole piece. This hit or a plurality of hits can damage the pole piece and/or the armature of the fluid injector. Therefore, it may be advantageously to prevent that the armature hits the pole piece or to reduce the power of these hits. The bistable spring element is configured to bias the armature in direction away from the pole piece when the armature is displaced from the second position further towards the pole piece. Therefore, the bistable spring element exerts the biasing force to the armature in direction away from the pole piece to reduce the velocity of the armature before it hits the pole piece. In one embodiment, the bistable spring element is configured to stop the armature before it hits the pole piece. If this is the case, the biasing force applied to the armature in direction away from the pole piece should be as large as the magnetic force applied to the armature by the solenoid. The bistable spring element can therefore reduce or eliminate the damages at the pole piece provoked by the armature. It is thus possible to operate the fluid injector with an advantageously long lifespan.

In one embodiment, the bistable spring element comprise a cup spring, wherein the first end of the cup spring is seated against the armature and wherein the second end of the cup spring is seated against the housing. The cup spring has the shape of a shell of a truncated cone. The cup spring is also known as bellville washer or as a coned disk spring. The first end of the cup spring is the radial inner end. The second end of the cup spring is the radial outer end of the cup spring. The cup spring can be used as the bistable spring element, because they can be manufactured such that they have two stable states. Cup springs can be produced in high numbers with relatively low costs. Therefore, the cup spring is cheap and available, this could help to reduce the costs of the fluid injector. In addition, it is relatively easy to determine the bistable behavior of the cup spring. In another embodiment, the bistable spring element may comprise a plurality of cup springs.

The first end of the cup spring and the second end of the cup spring can be seated against the housing and against the armature such that the ends have a radial clearance against the housing and/or the armature. The radial clearance may be advantageous for compensating changes in radial dimension during the switch form the first stable state to the second stable state. For example, a radial clearance may be provided between the first end and/or the armature and the second end and the housing.

It is preferred that the cup spring is characterized by a cone height ho of the cup spring and the thickness t of the cup spring, wherein the ratio between the cone height ho and the thickness t is the same or greater than the square root of eight. An advantageous bistable behavior of the cup spring is achievable when the ratio between the cone height ho and the thickness t is the same or greater than the square root of eight. If this is the case, a particular high fluid pressure in the fluid injector, for example even above 30MPa, is achievable. The cone height ho is equal to the difference between a free length l₀ and the thickness t. The free length l₀ is the maximal axial extension of the cup spring. The free length l₀ changes when the cup spring is deformed.

In an alternative embodiment, the bistable spring element has a meander-shaped cross sectional profile which comprises at least three curves, wherein each of the curves has a curvature of more than 90 degrees. The cross sectional profile is the profile which forms the bistable spring element when the profile is rotated by 360 degrees around an axis.

The meander-shaped cross sectional profile in particular comprises a sequence of three or more alternating left and right curves, wherein each curve has a curvature of more than 90 degrees. The curvature of a curve is a change of direction when passing through a curve. A curvature of more than 90 degrees means therefore a change of direction of more than 90 degrees. It is for example conceivable that the meander-shaped cross sectional profile of the bistable spring element comprises two left curves and two right curves starting radial inside, wherein each of the three curves comprises a curvature of more than 90 degrees.

The bistable behavior of the bistable spring element with the meander-shaped cross sectional profile is achieved with the at least three curves wherein each of the curves has a curvature of more than 90 degrees. The bistable spring element with the meander-shaped cross sectional profile is rotationally symmetric and can comprise an opening which is arranged coaxially with respect to the rotational axis. The inner radial end of the bistable spring element with the meander-shaped cross sectional profile is seated against the armature and the outer radial end of the bistable spring element with the meander-shaped cross sectional profile is seated against the housing. In one development, the bistable spring element with the meander-shaped cross sectional profile is welded to the armature and/or to the housing.

The bistable spring element with the meander-shaped cross sectional profile can advantageously apply a high biasing force to the armature to push the armature towards the pole piece. Another advantage is that the bistable spring element with the meander-shaped cross sectional profile can be easily welded to the armature and to the housing. It is possible to weld the bistable spring element with the meander-shaped cross sectional profile because this bistable spring element has particular small radial dimensional changes. Therefore it is not necessary to level out radial movement which may occur in case of a cup shaped bistable spring element. The connection between the bistable spring element with the meander-shaped cross sectional profile and the armature and the housing is therefore advantageously manufacturable and stable.

In one embodiment, the fluid injector comprises a calibration spring which is configured to exert a pressing force on the valve needle for pressing the valve needle in an axial direction which is opposite to the direction from the armature towards the pole piece. In particular the calibration spring can be preloaded to bias the valve needle towards the closed position for retaining the fluid injector closed when the actuator is deenergized. To move the valve needle away from the closed position and thus to allow the fluid flow through the fluid injector, it is necessary that the displacement force applied to the valve needle by the armature overcomes the pressing force of the calibration spring. The pressing force of the calibration spring can displace the valve needle from an open position to the closed position and can bring the armature from the second position to the first position when the actuator is deenergized.

In one embodiment, the valve needle comprises a stop element which is rigidly coupled to a shaft of the valve needle, and wherein the stop element is arranged to guide the valve needle axially relative to the housing. The stop element is for example a retainer or a bracket which is in particular welded to the shaft of the valve needle. The stop element may have a rotationally symmetric shape and is in some embodiments arranged coaxially with respect to the housing and/or with respect to the valve needle and/ or with respect to the pole piece. In one embodiment, the stop element is arranged in sliding contact with the pole piece so that the stop element holds the valve needle in its predefined radial position with respect to the axis L and in addition guides the valve needle axially with respect to the pole piece. The valve needle can thus be guided advantageously with respect to the housing.

In one embodiment, the calibration spring is configured to exert the pressing force on the stop element, and wherein the second coupling surface is arranged at the stop element. If this is the case, the shaft of the valve needle can be designed without any protrusions and has therefore advantageously a very simple shape. The calibration spring is for example seated against the stop element.

In one embodiment, the armature comprises a main body and a flange which protrudes from the main body and extends axially, wherein the first end of the bistable spring element is seated against the flange. In one development, the flange has the shape of a hollow tube. It is preferred that the flange is arranged coaxially with respect to the valve needle. In a further development, the flange is configured to compensate a radial movement of the bistable spring element. The flange may comprise a slot to compensate radial movement.

In another embodiment, the flange extends from the main body in axial direction away from the pole piece. According to this embodiment, it is advantageously possible to arrange the bistable spring element in the fluid injector. In addition, the flange can not get in contact with the pole piece and damage the pole piece or be damaged by the pole piece.

In one embodiment, the fluid injector comprises the solenoid which is configured to generate a magnetic field to move the armature towards the pole piece, and wherein the fluid injector comprises a component which is configured to push the armature in direction away from the pole piece. To operate the fluid injector in the reciprocating fashion the armature is moved towards the pole piece to displace the valve needle from the closed position and in direction away from the pole piece so that the valve needle can return to the closed position. The movement of the armature towards the pole piece is achieved by the solenoid which is configured to interact electromagnetically with the armature and by the bistable spring element. The movement of the armature in direction away from the pole piece is achieved by the component which is arranged or configured to push the armature in direction away from the pole piece so that the valve needle can be displaced in the closed position.

In one development, the component is the calibration spring. The calibration spring is used to hold the valve needle in the closed position and to displace the valve needle in the closed position and to displace the armature away from the pole piece. The fluid injector is therefore advantageously simple. The calibration spring exerts its pressing force in particular to the stop element.

In another development, the fluid injector comprises an additional spring which is configured to push the armature in direction away from the pole piece. The additional spring is a part which is configured to push the armature in direction away from the pole piece so that the fluid injector can be operated in the reciprocating fashion. The additional spring engages directly with the armature in one embodiment.

It is conceivable that the fluid injector comprises an additional solenoid which is configured to interact electromagnetically with the armature to move the armature in direction away from the pole piece. In this case, the additional solenoid is the component which is configured to push the armature in direction away from the pole piece so that the fluid injector can be operated in the reciprocating fashion. If this is the case, the movement of the armature can be controlled advantageously.

In some embodiments, the fluid injector is configured to inject fuel, water, urea or other fluids into specific parts of a vehicle. Such parts could be for example the engine or an exhaust pipe. According to another aspect, a vehicle comprising the fluid injector is specified.

Further advantages and advantageous embodiments of the fluid injector will become apparent from the detailed description of exemplary embodiments with reference:
- Fig. 1A - 1D: show longitudinal sections of a fluid injector according to a first exemplary embodiment with associated diagrams;
- Fig. 2: shows a cross-sectional profile of a cup spring;
- Fig. 3: shows a longitudinal section of a fluid injector according to a second exemplary embodiment with an additional spring;
- Fig. 4: shows a longitudinal section of a fluid injector according to a third exemplary embodiment with a meander-shaped bistable spring element and
- Fig. 5: shows a longitudinal section of a fluid injector according to a fourth exemplary embodiment with another meander-shaped bistable spring element.

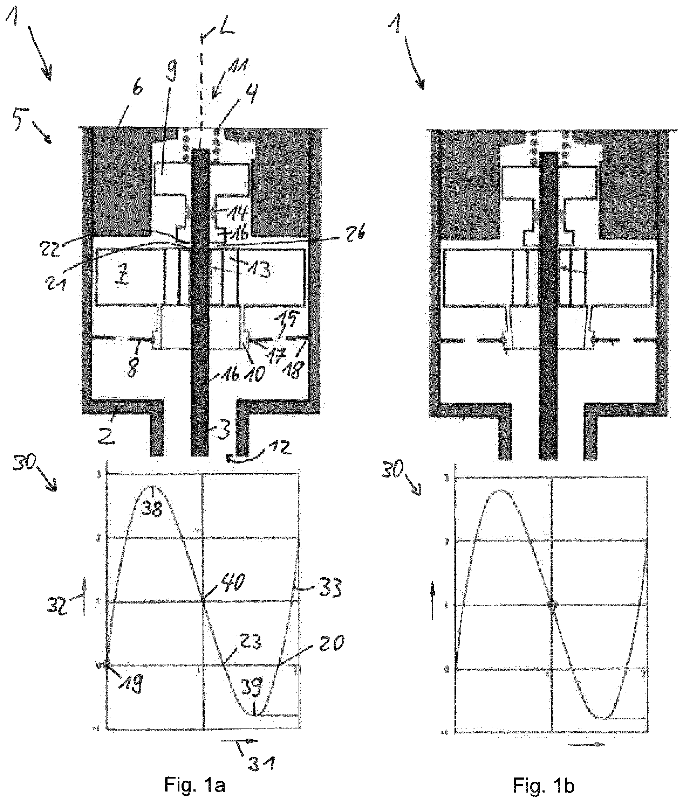

Figs. 1A to 1D show a fluid injector 1 according to a first exemplary embodiment of the present invention in a longitudinal section view. The fluid injector 1 comprises a housing 2 which extends along an axis L, a valve needle 3 which is axially moveable with respect to the housing 2 and which is coaxially arranged with respect to the axis L inside the housing 2. The valve needle 3 comprises a shaft 28 and a stop element 9. The stop element 9 is rigidly coupled to the shaft 28 by a rigid connection 14. The rigid connection 14 is, for example, a weld connection or a bold connection.

The fluid injector 1 according to the first exemplary embodiment, further comprises an actuator 5 which comprises a pole piece 6 and an armature 7. The pole piece 6 and the armature 7 are arranged in the housing 2. The pole piece 6 and the armature 7 may have a rotationally symmetric shape and are arranged concentrically with respect to the axis L. The pole piece 6 may be rigidly coupled to the housing 2. The armature 7 is axially moveable with respect to the housing 2. The armature 7 comprises a flange 10 which extends axially from a main body of the armature 7. The fluid injector 1 further comprises a bistable spring element 8 which is arranged in the housing 2 concentrically with respect to the axis L. The bistable spring element 8 comprises a first end 17 which is seated against the flange 10 of the armature 7 and the bistable spring element 8 comprises a second end 18 which is seated against the housing 2.

The fluid injector 1 according to the first exemplary embodiment, comprises an inlet portion 11 and an outlet portion 12. The housing 2 comprise a cavity in that the fluid can flow from the inlet portion 11 through the housing to the outlet portion 12. The armature 7 comprises through holes 13 and the bistable spring element 8 comprises openings 15. The through holes 13 and the openings 15 are designed to enable the fluid flow through the fluid injector 1.

The fluid injector 1 according to the first exemplary embodiment, further comprises a calibration spring 4 which is arranged to push the valve needle 3 towards a closed position. The calibration spring 4 exerts its pressing force on the stop element 9. The stop element 9 is arranged concentrically with respect to the pole piece 6. The stop element 9 can be slideably displaced with respect to the pole piece 6. The stop element 9 can therefore guide the valve needle 3 with respect to the pole piece 6 and with respect to the housing 2 and in addition can hold the valve needle 3 in its radial position.

The stop element 9 further comprises a second coupling surface 22. The armature 7 comprises a first coupling surface 21. The coupling surfaces 21, 22 are arranged to engage in form fit connection with each other to displace the valve needle 3 axially. As it can be seen in fig. 1A, there is an axial gap 26 established between the coupling surfaces 21, 22. The armature 7 has to move towards the stop element 9 to close the axial gap 26 between the first coupling surface 21 and the second coupling surface 22 so that the first coupling surface 21 and the second coupling surface 22 engage in form fit connection to displace the valve needle 3 axially.

The bistable spring element 8 of the shown embodiment in figs. 1A to 1D is a cup spring. Each of the figs. 1A to 1D further show a diagram 30 which shows a spring force of the cup spring versus an elastic deformation of the cup spring. The elastic deformation is plotted on the x-axis 31 of the diagram 30 and the biasing force is plotted on the y-axis 32 of the diagram 30.

As it can be seen in the diagrams 30 of the figs. 1A to 1D, the biasing force of the cup spring starts at zero at a first stable state 19 of the cup spring. In this state the cup spring is not deformed and is therefore not generating any biasing force. If the cup spring will be deformed, the biasing force will increase until it reaches a local maximum 38. At the local maximum 38 the bistable spring element 8 exerts a maximum biasing force to the armature in direction away from the pole piece 6.

When the cup spring is deformed further, the biasing force decreases, it passes a turning point 40, until the biasing force becomes zero again at an unstable equilibrium state 23 of the cup spring. At the turning point 40, the cup spring reaches the flat condition. This means that the cup spring will have the cross section of a normal washer, there will be no conical surfaces. When the cup spring is deformed further in the same direction the biasing force reaches a local minimum 39. At the local minimum 39 the bistable spring element exerts a maximum biasing force in direction towards the pole piece 6. When the cup spring is deformed further, it reaches a second stable state 20.

If the force which deforms the cup spring is no longer applied to the cup spring, the cup spring will automatically return to its first stable state 19 when it is between the first stable state 19 and the unstable equilibrium state 23. If the deformation of the cup spring is between the unstable equilibrium state 23 and the second stable state 20 and the force which deforms the cup spring is no longer applied to the cup spring, it will always automatically return to the second stable state 20. Because of that, the biasing force of the cup spring changes its axial direction. When the cup spring is between its first stable state 19 and the unstable equilibrium state 23 the biasing force is directed in a first direction and if the bistable spring element 8 is between the unstable equilibrium state 23 and the second stable state 20 the biasing force is directed opposite to the first direction.

The cup spring is seated with its first end 17 against the flange 10 of the armature 7. The armature 7 is pulled towards the pole piece 6 when the actuator 5 applies an electromagnetic force to the armature 7. To move the armature 7 towards the pole piece 6, the magnetic force has to be greater than the biasing force applied to the armature 7 by the cup spring. If this is the case the armature 7 will move towards the pole piece 6. Because of that, the cup spring will deform, and the biasing force will change its amount. When the armature 7 has moved until the cup spring has reached the unstable equilibrium state 23 the axial direction of the biasing force changes. Therefore, the force which pushes the armature 7 towards the pole piece 6 will be the sum of the magnetic force applied to the armature 7 and the biasing force applied to the armature 7 by the cup spring and both forces point now in particular towards the same axial direction and have therefore the same sign (+ or -). A displacement force which is the sum of the magnetic force and the biasing force and which pushes the armature towards the pole piece can vary during the movement of the armature. It is thus possible do design the stop element 9 and the armature 7 and the axial gap 26 so that an impulse applied to the valve needle 3 to displace the valve needle 3 is very high. The valve needle 3 can therefore be displaced from the closed position against the hydraulic force of the fluid in the cavity and the bias of the calibration spring to allow fluid flow to be dispensed from the fluid injector 1.

Fig. 1B shows the fluid injector when the cup spring reaches its flat condition. The gap 26 between the first coupling surface 21 and the second coupling surface 22 is not completely closed yet and the first coupling surface 21 and the second coupling surface 22 cannot engage yet to displace the valve needle 3 from the closed position.

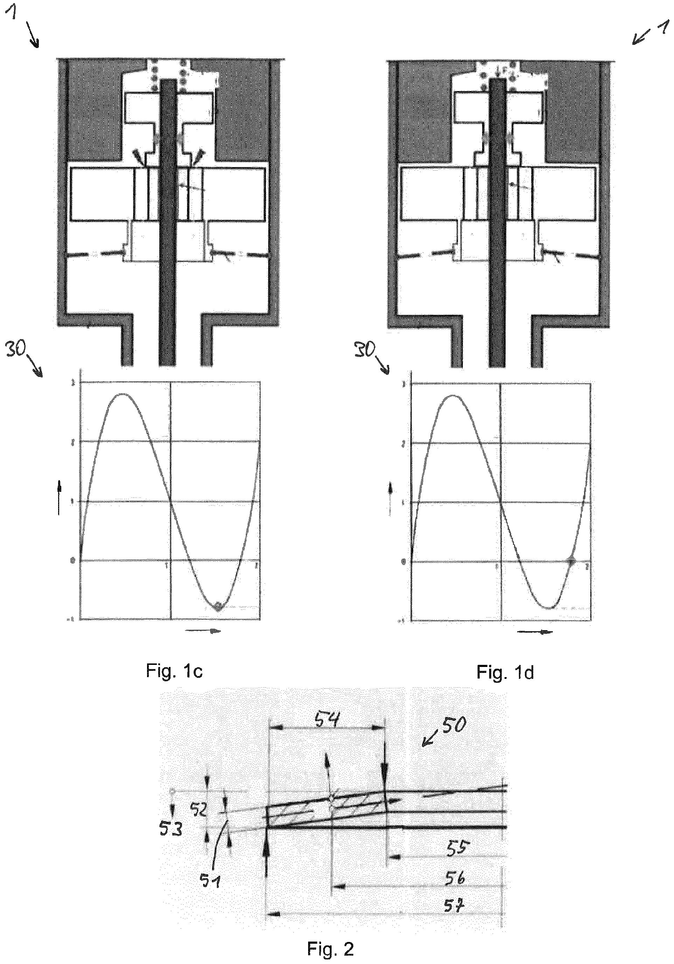

Fig. 1C shows the fluid injector 1 when the biasing force of the cup spring reaches its maximum in the direction towards the pole piece. As it can be seen from fig. 1C the axial gap 26 is closed and the first coupling surface 21 engages with the second coupling surface 22 to displace the valve needle 3 from the closed position.

Fig. 1D shows the fluid injector 1 when the cup spring is in its second stable state 20. Now the valve needle 3 is displaced from the closed position and a flow of fluid can flow through the fluid injector 1. To bring the valve needle 3 and the armature 7 back to its starting position they have to move axially in direction away from the pole piece 6. To allow this in one embodiment the solenoid has to be deenergized so that the magnetic force applied to the armature becomes zero. Now the force applied to the stop element 9 by the calibration spring 4 pushes the valve needle 3 to the closed position and the armature 7 back to the first position in which the bistable spring element 8 is in its first stable state 19. The calibration spring 4 is configured to overcome the biasing force of the bistable spring element 8 during the movement of the armature 7 back to the first position. The calibration spring 4 exerts the force to the stop element 9 and therefore also to the armature 7. Now the stop element 9 and the armature 7 gain speed until the valve needle 3 is in the closed position. The armature 7 is not rigidly coupled to the stop element 9 and can therefore move further in direction away from the pole piece 6. With the gained speed from the calibration spring 4 the armature 7 can overcome the biasing fore of the bistable spring element 8 and return to its first position which is the starting position.

Fig. 2 shows a cross sectional profile 50 of the cup spring. The cup spring can be defined by the dimensions which are shown in fig. 2. Those dimensions are a thickness t, a free length l₀, a leverage 53, an inner diameter 54, a diameter to the center of gravity 55 and an outer diameter 56.

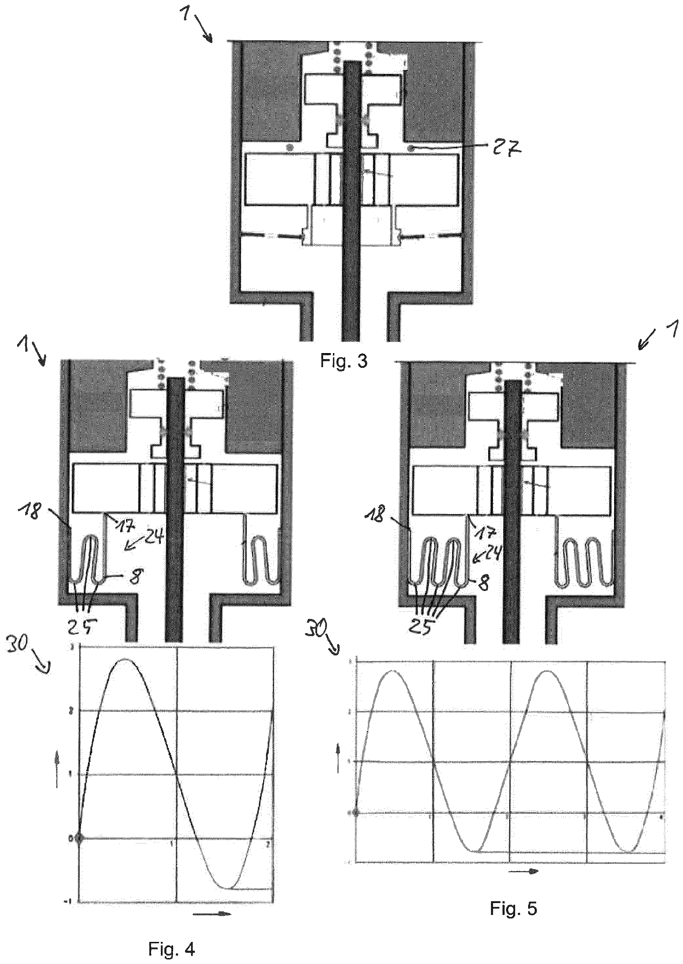

Fig. 3 shows a fluid injector 1 according to a second exemplary embodiment with an additional spring 27. The additional spring is arranged axially between the pole piece 6 and the armature 7. The additional spring 27 is configured to push the armature 7 in the direction away from the pole piece 6.

Figs. 4 and 5 show a fluid injector 1 according to a third and fourth exemplary embodiment with the bistable spring element 8, wherein the bistable spring element 8 has a meander-shaped cross sectional profile 24. Fig. 4 shows an embodiment, wherein the bistable spring element 8 with the meander-shaped cross sectional profile 24 which comprises three curves 25. All three curves 25 have a curvature, a change of direction, of approximately 180 degrees. The associated diagram 30 of the bistable spring element 8 with the three curves 25 shows a similar behavior or the biasing force compared to the cup spring. The diagram shows one maximum, one minimum, one turning point, two stable states and one unstable equilibrium state.

Fig. 5 shows another embodiment of a bistable spring element 8 with the meander-shaped cross sectional profile which comprises five curves 25, wherein each of the curves 25 has a curvature of approximately 180 degrees. The associated diagram 30 shows a different behavior compared to the bistable spring element with three curves. The diagram shows two maximum, two minimum, three turning points, three stable states and two unstable equilibrium states. The biasing force applied to the armature 7 will change its axial direction during the movement of the armature 7 towards the pole piece 7 four times. When the bistable spring element 8 is between the first stable state and the first unstable equilibrium state, the biasing force points away from the pole piece 6. When the bistable spring element 8 is between the first unstable equilibrium state and the second stable state, the biasing force points towards the pole piece 6. When the bistable spring element 8 is between the second stable state and the second unstable equilibrium state, the biasing force points away from the pole piece 6. When the bistable spring element 8 is between the second unstable equilibrium state and the third stable state, the biasing force points towards the pole piece 6. With the bisable spring element 8 with five curves it is therefore possible to slow down or to stop the movement of the armature 7 when the bistable spring element 8 is in the second stable state.

The first end 17 of the bistable spring element 8 with the meander-shaped cross sectional profile is welded to the armature 7 and the second end 18 of the bistable spring element 8 with the meander-shaped cross sectional profile is welded to the housing 2. It is also conceivable that the bistable spring element 8 is connected to the armature 7 and the housing 2 by different means.

## Claims

1. A fluid injector (1) for injecting fluid, the fluid injector (1) comprising:
- a housing (2) which extends along an axis L;
- a valve needle (3) which is axially moveable with respect to the housing (2);
- an actuator (5) which comprises a pole piece (6) and an armature (7), wherein the armature (7) is axially moveable with respect to the housing (2), and wherein the armature (7) is mechanically coupled with the valve needle (3) to displace the valve needle (3) axially when the armature (5) moves towards the pole piece (6); the fluid injector is **characterised in that** it further comprises:
- a bistable spring element (8) which comprises a first end (17) which is seated against the armature (7) and a second end (18) which is seated against the housing (2), wherein the bistable spring element (8) has a first stable state (19), a second stable state (20) and an unstable equilibrium state (23),
wherein the armature (7) is displaceable in a reciprocating fashion between a first position in which the bistable spring element (8) is in the first stable state (19) and a second position in which the bistable spring element (8) is in the second stable state (20) via the unstable equilibrium state (23) of the bistable spring element (8),
wherein the bistable spring element (8) biases the armature (7) in direction away from the pole piece (6) when the bistable spring element (8) is between the first stable state (19) and the unstable equilibrium state (23), and wherein the bistable spring element (8) biases the armature (7) towards the pole piece (6) when the bistable spring element (8) is between the unstable equilibrium state (23) and the second stable state (20).

2. The fluid injector (1) according to claim 1, wherein the armature (7) comprises a first coupling surface (21) and the valve needle (3) comprises a second coupling surface (22), wherein the coupling surfaces (21, 22) are arranged to engage in form fit connection to displace the valve needle (3) axially, wherein the coupling surfaces (21, 22) are spaced apart from each other to form an axial gap (26) between the coupling surfaces (21, 22) when the bistable spring element (8) is between the first stable state (19) and the unstable equilibrium state (23).

3. The fluid injector (1) according to claim 2, wherein the first coupling surface (21) and the second coupling surface (22) are arranged such that the axial gap (26) closes at an axial position of the armature (7) where the biasing force of the bistable spring element (8) applied to the armature (7) towards the pole piece (6) reaches its maximum.

4. The fluid injector (1) according to any one of the preceding claims, wherein the armature (7) is displaceable from the second position further towards the pole piece (6), wherein the bistable spring element (8) is configured to bias the armature (7) in direction away from the pole piece (6) when the armature (7) is displaced from the second position further towards the pole piece (6).

5. The fluid injector (1) according to any one of the preceding claims, wherein the bistable spring element (8) comprises a cup spring, wherein the first end (17) of the cup spring is seated against the armature (7), and wherein the second end (18) of the cup spring is seated against the housing (2).

6. The fluid injector (1) according to claim 5 wherein the cup spring is **characterized by** a cone height ho of the cup spring and a thickness t (50) of the cup spring, wherein the ratio the cone height ho and the thickness t (50) is the same or greater than the square root of eight h₀/t ≥ √8.

7. The fluid injector (1) according to any one of the claims 1 to 4, wherein the bistable spring element (8) has a meander-shaped cross-sectional profile (24) which comprises at least three curves (25), wherein each of the curves has a curvature of more than 90 degrees.

8. The fluid injector (1) according to any one of the preceding claims, wherein the fluid injector (1) comprises a calibration spring (4) which is configured to exert a pressing force on the valve needle (3) for pressing the valve needle (3) in an axial direction which is opposite to the direction from the armature (7) towards the pole piece (6).

9. The fluid injector (1) according to any one of the preceding claims, wherein the valve needle (3) comprises a stop element (9) which is rigidly coupled to a shaft (28) of the valve needle (3), and wherein the stop element (9) is arranged to guide the valve needle (3) axially relative to the housing (2).

10. The fluid injector (1) according to claim 8 and 9, wherein the calibration spring (4) is configured to exert the pressing force on the stop element (9), and wherein the second coupling surface (22) is comprised by the stop element (9).

11. The fluid injector (1) according to any one of the preceding claims, wherein the armature (7) comprises a main body and a flange (10) which protrudes from the main body and extends axially, wherein the first end (17) of the bistable spring element (8) is seated against the flange (10).

12. The fluid injector (1) according to claim 11, wherein the flange (10) extends from the main body in axial direction away from the pole piece (6).

13. The fluid injector (1) according to any one of the preceding claims, wherein the actuator (5) comprises a solenoid which is configured to generate a magnetic field to move the armature (7) towards the pole piece (6), and wherein the fluid injector (1) comprises a component which is configured to push the armature (7) in direction away from the pole piece (6).

14. The fluid injector (1) according to claim 13, wherein the component is the calibration spring.

15. The fluid injector (1) according to any one of the preceding claims, wherein the fluid injector (1) comprises an additional spring (27) which is configured to push the armature (7) in direction away from the pole piece (6).

## Patentansprüche

1. Fluidinjektor (1) zum Einspritzen von Fluid, wobei der Fluidinjektor (1) Folgendes umfasst:
- ein Gehäuse (2), das sich entlang einer Achse L erstreckt;
- eine Ventilnadel (3), die bezüglich des Gehäuses (2) axial beweglich ist;
- einen Aktuator (5), der ein Polstück (6) und einen Anker (7) umfasst, wobei der Anker (7) bezüglich des Gehäuses (2) axial beweglich ist und wobei der Anker (7) mit der Ventilnadel (3) mechanisch gekoppelt ist, um die Ventilnadel (3) axial zu verschieben, wenn sich der Anker (5) zu dem Polstück (6) bewegt; wobei der Fluidinjektor **dadurch gekennzeichnet ist, dass** er ferner Folgendes umfasst:
- ein bistabiles Federelement (8), das ein erstes Ende (17), das an dem Anker (7) anliegt, und ein zweites Ende (18), das an dem Gehäuse (2) anliegt, umfasst, wobei das bistabile Federelement (8) einen ersten stabilen Zustand (19), einen zweiten stabilen Zustand (20) und einen instabilen Gleichgewichtszustand (23) aufweist,
wobei der Anker (7) in einer Hin- und Herbewegung zwischen einer ersten Position, in der sich das bistabile Federelement (8) in dem ersten stabilen Zustand (19) befindet, und einer zweiten Position, in der sich das bistabile Federelement (8) in einem zweiten stabilen Zustand (20) befindet, über den instabilen Gleichgewichtszustand (23) des bistabilen Federelements (8) verschiebbar ist,
wobei das bistabile Federelement (8) den Anker (7) in einer von dem Polstück (6) weg verlaufenden Richtung vorbelastet, wenn sich das bistabile Federelement (8) zwischen dem ersten stabilen Zustand (19) und dem instabilen Gleichgewichtszustand (23) befindet, und
wobei das bistabile Federelement (8) den Anker (7) zu dem Polstück (6) vorbelastet, wenn sich das bistabile Federelement (8) zwischen dem instabilen Gleichgewichtszustand (23) und dem zweiten stabilen Zustand (20) befindet.

2. Fluidinjektor (1) nach Anspruch 1, wobei der Anker (7) eine erste Kopplungsfläche (21) umfasst und die Ventilnadel (3) eine zweite Kopplungsfläche (22) umfasst, wobei die Kopplungsflächen (21, 22) dazu angeordnet sind, formschlüssig ineinander einzugreifen, um die Ventilnadel (3) axial zu verschieben, wobei die Kopplungsflächen (21, 22) voneinander beabstandet sind, um einen axialen Spalt (26) zwischen den Kopplungsflächen (21, 22) zu bilden, wenn sich das bistabile Federelement (8) zwischen dem ersten stabilen Zustand (19) und dem instabilen Gleichgewichtszustand (23) befindet.

3. Fluidinjektor (1) nach Anspruch 2, wobei die erste Kopplungsfläche (21) und die zweite Kopplungsfläche (22) so angeordnet sind, dass sich der axiale Spalt (26) an einer axialen Position des Ankers (7), in der die an den Anker (7) zu dem Polstück (6) angelegte Vorbelastungskraft des bistabilen Federelements (8) ihr Maximum erreicht, schließt.

4. Fluidinjektor (1) nach einem der vorhergehenden Ansprüche, wobei der Anker (7) aus der zweiten Position weiter zu dem Polstück (6) verschiebbar ist, wobei das bistabile Federelement (8) dazu konfiguriert ist, den Anker (7) in einer von dem Polstück (6) weg verlaufenden Richtung vorzubelasten, wenn der Anker (7) aus der zweiten Position weiter zu dem Polstück (6) verschoben wird.

5. Fluidinjektor (1) nach einem der vorhergehenden Ansprüche, wobei das bistabile Federelement (8) eine Tellerfeder umfasst, wobei das erste Ende (17) der Tellerfeder an dem Anker (7) anliegt und wobei das zweite Ende (18) der Tellerfeder an dem Gehäuse (2) anliegt.

6. Fluidinjektor (1) nach Anspruch 5, wobei die Tellerfeder durch eine Konushöhe h₀ der Tellerfeder und eine Dicke t (50) der Tellerfeder gekennzeichnet ist, wobei das Verhältnis der Konushöhe h₀ und der Dicke t (50) gleich der oder größer als die Quadratwurzel von acht ist h0/t ≥ √8.

7. Fluidinjektor (1) nach einem der Ansprüche 1 bis 4, wobei das bistabile Federelement (8) ein mäanderförmiges Querschnittsprofil (24) aufweist, das mindestens drei Kurven (25) umfasst, wobei jede der Kurven eine Krümmung von mehr als 90 Grad aufweist.

8. Fluidinjektor (1) nach einem der vorhergehenden Ansprüche, wobei der Fluidinjektor (1) eine Kalibrierfeder (4) umfasst, die dazu ausgebildet ist, eine Presskraft auf die Ventilnadel (3) zum Pressen der Ventilnadel (3) in einer axialen Richtung, die der Richtung von dem Anker (7) zu dem Polstück (6) entgegengesetzt ist, auszuüben.

9. Fluidinjektor (1) nach einem der vorhergehenden Ansprüche, wobei die Ventilnadel (3) ein Anschlagelement (9) umfasst, das starr mit dem Schaft (28) der Ventilnadel (3) gekoppelt ist, und wobei das Anschlagelement (9) zum axialen Führen der Ventilnadel (3) bezüglich des Gehäuses (2) angeordnet ist.

10. Fluidinjektor (1) nach Anspruch 8 und 9, wobei die Kalibrierfeder (4) dazu ausgebildet ist, die Presskraft auf das Anschlagelement (9) auszuüben, und wobei die zweite Kopplungsfläche (22) durch das Anschlagelement (9) gebildet wird.

11. Fluidinjektor (1) nach einem der vorhergehenden Ansprüche, wobei der Anker (7) einen Hauptkörper und einen Flansch (10) umfasst, der von dem Hauptkörper hervorsteht und sich axial erstreckt, wobei das erste Ende (17) des bistabilen Federelements (8) an dem Flansch (10) anliegt.

12. Fluidinjektor (1) nach Anspruch 11, wobei sich der Flansch (10) von dem Hauptkörper in einer axialen Richtung von dem Polstück (6) erstreckt.

13. Fluidinjektor (1) nach einem der vorhergehenden Ansprüche, wobei der Aktuator (5) ein Solenoid umfasst, das dazu ausgebildet ist, ein Magnetfeld zu erzeugen, um den Anker (7) zu dem Polstück (6) zu bewegen, und wobei der Fluidinjektor (1) eine Komponente umfasst, die dazu konfiguriert ist, den Anker (7) in einer von dem Polstück (6) weg verlaufenden Richtung zu drücken.

14. Fluidinjektor (1) nach Anspruch 13, wobei die Komponente eine Kalibrierfeder ist.

15. Fluidinjektor (1) nach einem der vorhergehenden Ansprüche, wobei der Fluidinjektor (1) eine zusätzliche Feder (27) umfasst, die dazu ausgebildet ist, den Anker (7) in einer von dem Polstück (6) weg verlaufenden Richtung zu drücken.

## Revendications

1. Injecteur de fluide (1) pour injecter un fluide, l'injecteur de fluide (1) comprenant :
- un logement (2) qui s'étend le long d'un axe L ;
- un pointeau de soupape (3) qui est axialement mobile par rapport au logement (2) ;
- un actionneur (5) qui comprend une pièce polaire (6) et un induit (7),
dans lequel l'induit (7) est axialement mobile par rapport au logement (2), et dans lequel l'induit (7) est mécaniquement couplé au pointeau de soupape (3) pour déplacer le pointeau de soupape (3) axialement lorsque l'induit (5) se meut vers la pièce polaire (6) ; l'injecteur de fluide est **caractérisé en ce qu'**il comprend en outre :
- un élément à ressort bistable (8) qui comprend une première extrémité (17) qui est posée contre l'induit (7) et une seconde extrémité (18) qui est posée contre le logement (2), dans lequel l'élément à ressort bistable (8) a un premier état stable (19), un second état stable (20) et un état d'équilibre instable (23),
dans lequel l'induit (7) est déplaçable en va-et-vient entre une première position dans laquelle l'élément à ressort bistable (8) est dans le premier état stable (19) et une seconde position dans laquelle l'élément à ressort bistable (8) est dans le second état stable (20) via l'état d'équilibre instable (23) de l'élément à ressort bistable (8),
dans lequel l'élément à ressort bistable (8) sollicite l'induit (7) dans une direction à l'opposé de la pièce polaire (6) lorsque l'élément à ressort bistable (8) est entre le premier état stable (19) et l'état d'équilibre instable (23), et dans lequel l'élément à ressort bistable (8) sollicite l'induit (7) vers la pièce polaire (6) lorsque l'élément à ressort bistable (8) est entre l'état d'équilibre instable (23) et le second état stable (20).

2. Injecteur de fluide (1) selon la revendication 1, dans lequel l'induit (7) comprend une première surface de couplage (21) et le pointeau de soupape (3) comprend une seconde surface de couplage (22), dans lequel les surfaces de couplage (21, 22) sont agencées pour entrer en prise sous liaison par complémentarité de forme pour déplacer le pointeau de soupape (3) axialement, dans lequel les surfaces de couplage (21, 22) sont espacées l'une de l'autre pour former un espace axial (26) entre les surfaces de couplage (21, 22) lorsque l'élément à ressort bistable (8) est entre le premier état stable (19) et l'état d'équilibre instable (23).

3. Injecteur de fluide (1) selon la revendication 2, dans lequel la première surface de couplage (21) et la seconde surface de couplage (22) sont agencées de telle sorte que l'espace axial (26) se ferme à une position axiale de l'induit (7) où la force de sollicitation de l'élément à ressort bistable (8) appliquée sur l'induit (7) vers la pièce polaire (6) atteint son maximum.

4. Injecteur de fluide (1) selon l'une quelconque des revendications précédentes, dans lequel l'induit (7) est déplaçable à partir de la seconde position davantage vers la pièce polaire (6), dans lequel l'élément à ressort bistable (8) est configuré pour solliciter l'induit (7) dans une direction à l'opposé de la pièce polaire (6) lorsque l'induit (7) est déplacé à partir de la seconde position davantage vers la pièce polaire (6).

5. Injecteur de fluide (1) selon l'une quelconque des revendications précédentes, dans lequel l'élément à ressort bistable (8) comprend un ressort Belleville, dans lequel la première extrémité (17) du ressort Belleville est posée contre l'induit (7), et dans lequel la seconde extrémité (18) du ressort Belleville est posée contre le logement (2).

6. Injecteur de fluide (1) selon la revendication 5, dans lequel le ressort Belleville est **caractérisé par** une hauteur de cône h₀ du ressort Belleville et une épaisseur t (50) du ressort Belleville, dans lequel le rapport de la hauteur de cône h₀ et de l'épaisseur t (50) est identique ou supérieure à la racine carrée de huit h₀/t ≥ √8.

7. Injecteur de fluide (1) selon l'une quelconque des revendications 1 à 4, dans lequel l'élément à ressort bistable (8) a un profil de section transversale de forme sinueuse (24) qui comprend au moins trois courbes (25), dans lequel chacune des courbes a une courbure de plus de 90 degrés.

8. Injecteur de fluide (1) selon l'une quelconque des revendications précédentes, dans lequel l'injecteur de fluide (1) comprend un ressort d'étalonnage (4) qui est configuré pour exercer une force de pression sur le pointeau de soupape (3) pour presser le pointeau de soupape (3) dans une direction axiale qui est opposée à la direction depuis l'induit (7) vers la pièce polaire (6).

9. Injecteur de fluide (1) selon l'une quelconque des revendications précédentes, dans lequel le pointeau de soupape (3) comprend un élément d'arrêt (9) qui est rigidement couplé à une tige (28) du pointeau de soupape (3), et dans lequel l'élément d'arrêt (9) est agencé pour guider le pointeau de soupape (3) axialement relativement au logement (2).

10. Injecteur de fluide (1) selon la revendication 8 et 9, dans lequel le ressort d'étalonnage (4) est configuré pour exercer la force de pression sur l'élément d'arrêt (9), et dans lequel la seconde surface de couplage (22) est comprise par l'élément d'arrêt (9).

11. Injecteur de fluide (1) selon l'une quelconque des revendications précédentes, dans lequel l'induit (7) comprend un corps principal et une bride (10) qui fait saillie à partir du corps principal et s'étend axialement, dans lequel la première extrémité (17) de l'élément à ressort bistable (8) est posée contre la bride (10).

12. Injecteur de fluide (1) selon la revendication 11, dans lequel la bride (10) s'étend à partir du corps principal dans une direction axiale à l'opposé de la pièce polaire (6).

13. Injecteur de fluide (1) selon l'une quelconque des revendications précédentes, dans lequel l'actionneur (5) comprend un solénoïde qui est configuré pour générer un champ magnétique pour mouvoir l'induit (7) vers la pièce polaire (6), et dans lequel l'injecteur de fluide (1) comprend un composant qui est configuré pour pousser l'induit (7) dans une direction à l'opposé de la pièce polaire (6).

14. Injecteur de fluide (1) selon la revendication 13, dans lequel le composant est le ressort d'étalonnage.

15. Injecteur de fluide (1) selon l'une quelconque des revendications précédentes, dans lequel l'injecteur de fluide (1) comprend un ressort supplémentaire (27) qui est configuré pour pousser l'induit (7) dans une direction à l'opposé de la pièce polaire (6).
